(19) Europäisches Patentamt
European Patent Office
Office européen des brevets

(11) EP 2 500 974 B1

(12) # EUROPEAN PATENT SPECIFICATION

(45) Date of publication and mention of the grant of the patent:
**04.01.2017 Bulletin 2017/01**

(51) Int Cl.:
***H01M 10/0525*** *(2010.01)* ***H01M 10/0567*** *(2010.01)*
***H01M 10/0568*** *(2010.01)* ***H01M 10/0569*** *(2010.01)*

(21) Application number: **12158494.0**

(22) Date of filing: **07.03.2012**

(54) **Electrolyte for rechargeable lithium battery, and rechargeable lithium battery including the same**

Elektrolyt für eine wiederaufladbare Lithiumbatterie und wiederaufladbare Lithiumbatterie damit

Électrolyte pour batterie au lithium rechargeable, et batterie au lithium rechargeable le comprenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2012 US 201213363271**
**14.03.2011 US 201161452512 P**

(43) Date of publication of application:
**19.09.2012 Bulletin 2012/38**

(73) Proprietors:
- **Samsung SDI Co., Ltd.**
  **Gyeonggi-do (KR)**
- **Robert Bosch GmbH**
  **70442 Stuttgart (DE)**

(72) Inventor: **KIM, Seung-Mo**
**Gyeonggi-do (KR)**

(74) Representative: **Mounteney, Simon James**
**Marks & Clerk LLP**
**90 Long Acre**
**London**
**WC2E 9RA (GB)**

(56) References cited:
**WO-A1-2010/137571** **US-A1- 2005 019 670**
**US-A1- 2006 134 527**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 500 974 B1

## Description

## BACKGROUND

### 1. Field

This disclosure relates to an electrolyte for a rechargeable lithium battery and a rechargeable lithium battery including the same.

### 2. Description of the Related Art

Lithium rechargeable batteries have recently drawn attention as a power source for small portable electronic devices. They use an organic electrolyte solution and thereby, have twice as high discharge voltage as a conventional battery using an alkali aqueous solution and accordingly, have high energy density.

This rechargeable lithium battery is used by injecting an electrolyte into a battery cell including a positive electrode including a positive active material that can intercalate and deintercalate lithium, and a negative electrode including a negative active material that can intercalate and deintercalate lithium.

Recently, a rechargeable lithium battery for a hybrid electric vehicle (HEV) and an electric vehicle (EV) is increasingly required, as an environmentally-friendly electric vehicle is increasingly expected. This battery for an electric vehicle should have high power output at a room temperature and a low temperature and excellent characteristic at a high temperature, which can be accomplished by adding an appropriate additive to form an excellent solid electrolyte interface (SEI) on the surface of a negative electrode.

## SUMMARY

One embodiment of the present invention provides an electrolyte for a rechargeable lithium battery having excellent output characteristic during a cycle at a high temperature and when allowed to stand as well as at a room temperature and a low temperature. Another embodiment of the present invention provides a rechargeable lithium battery including the electrolyte.

According to one embodiment of the present invention, provided is an electrolyte for a rechargeable lithium battery according to claim 1, which includes at least one first lithium salt selected from the group consisting of $LiPF_6$, $LiBF_4$, $LiBF_6$, $LiSbF_6$, $LiAsF_6$, $LiSO_3CF_3$, $LiN(CF_3SO_2)_2$, $LiN(C_2F_5SO_2)_2$, $LiClO_4$, $LiAlO_2$, $LiAlCl_4$, or a combination thereof; at least one second lithium salt represented by the following Chemical Formula 3-1; at least one non-aqueous organic solvent; and at least one additive including a compound represented by the following Chemical Formula 9 wherein the compound represented by Chemical Formula 9 and the second lithium salt is mixed in a weight ratio ranging from 0.005:1 to 1:1.

[Chemical Formula 1] (which may be present in addition to the second lithium salt of Chemical Formula 3-1)

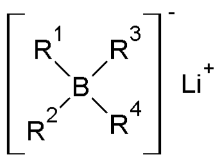

In Chemical Formula 1,

$R^1$ and $R^2$ are each independently F, or $R^1$ and $R^2$ are linked to a substituent represented by the following Chemical Formula 2 to form a ring, and

$R^3$ and $R^4$ are linked to a substituent represented by the following Chemical Formula 2 to form a ring.

[Chemical Formula 2]

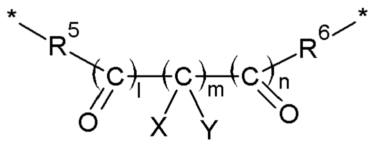

In Chemical Formula 2,$R^5$ and $R^6$ are each independently O or S, X and Y are each independently hydrogen or F, l and n are independently 0 or 1, and m is an integer ranging from 0 to 5.

[Chemical Formula 3-1]

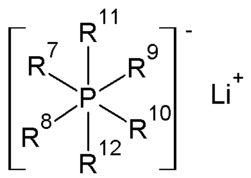

In Chemical Formula 3-1,

$R^7$ and $R^8$ are each independently F, or $R^7$ and $R^8$ are linked to a substituent represented by the above Chemical Formula 2 to form a ring,
$R^9$ and $R^{10}$ are linked to a substituent represented by the above Chemical Formula 2 to form a ring, and $R^{11}$ and $R^{12}$ are each independently F.

[Chemical Formula 3-2] (which may be present in addition to the second lithium salt of Chemical Formula 3-1)

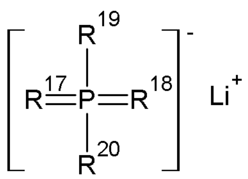

In Chemical Formula 3-2, $R^{17}$ and $R^{18}$ are each independently O, S or NR (wherein R is a substituted or unsubstituted $C_1$ to $C_5$ alkyl group), and
$R^{19}$ and $R^{20}$ are each independently F.

[Chemical Formula 9]

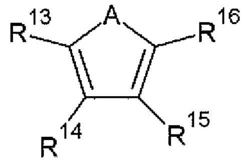

In Chemical Formula 9,

A is S, O, or NR (wherein, R is hydrogen, or a substituted or unsubstituted $C_1$ to $C_{20}$ alkyl group), and
$R^{13}$ to $R^{16}$ are each independently hydrogen, a halogen, a substituted or unsubstituted $C_1$ to $C_{20}$ alkyl group, or a substituted or unsubstituted $C_1$ to $C_{20}$ alkoxy group, and $R^{14}$ and $R^{15}$ are linked by a substituent represented by Chemical Formula 2 to form a ring.

The at least one second lithium salt may include at least one selected from the compounds represented by the following Chemical Formulae 6 or 7.

[Chemical Formula 6]

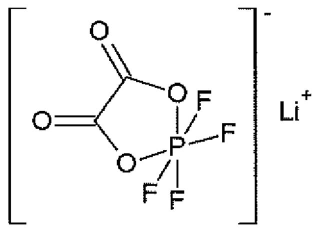

[Chemical Formula 7]

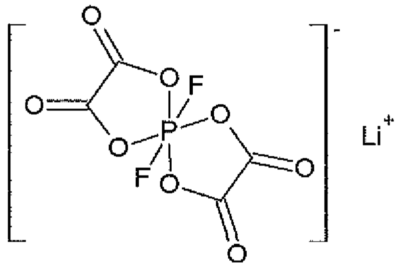

The additive may include at least one selected from the compounds represented by the following Chemical Formulas 10 to 13.

[Chemical Formula 10]

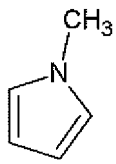

[Chemical Formula 11]

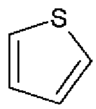

[Chemical Formula 12]

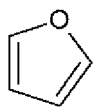

[Chemical Formula 13]

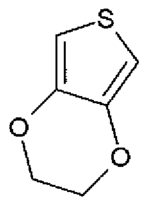

In a preferred embodiment of the present invention, the at least one compound represented by Chemical Formula 9 is

[Chemical Formula 10]

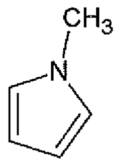

or

[Chemical Formula 11]

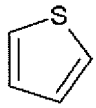

The second lithium salt may optionally be included in an amount ranging from 0.1 to 10 wt% based on the total weight of the electrolyte, optionally between 0.5 and 5 wt%, optionally between 0.5 and 1.5 wt%, and optionally between 0.75 and 2 wt%.

The additive may optionally be included in an amount ranging from 0.005 to 3 wt% based on the total weight of the electrolyte, optionally between 0.01 and 1 wt%, optionally between 0.03 and 0.5 wt%, optionally between 0.03 and 0.1 wt%.

In a preferred embodiment of the present invention the first lithium salt and the second lithium salt may optionally be mixed in a weight ratio ranging from 1:9 to 9:1, optionally between 1:5 and 5:1, optionally between 1:3 and 3:1.

In a preferred embodiment of the present invention the compound represented by Chemical Formula 9 and the second lithium salt may optionally be mixed in a weight ratio between 0.03:1 and 0.6:1, optionally between 0.05:1 and 0.3:1.

The non-aqueous organic solvent may optionally include a linear carbonate compound, a cyclic carbonate compound, an ester-based compound, an ether-based compound, a ketone-based compound, or a combination thereof. In a preferred embodiment of the present invention the at least one non-aqueous solvent is a carbonate selected from the group consisting of diethyl carbonate (DEC), ethylmethyl carbonate (EMC), dimethyl carbonate (DMC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), vinylethylene carbonate (VEC), or a combination thereof.

In a preferred embodiment of the present invention the at least one non-aqueous solvent comprises a mixture of at least one linear carbonate and at least one cyclic carbonate, optionally 50 to 99 wt% of the at least one linear carbonate and 1 to 50 wt% of the at least one cyclic carbonate compound based on the total amount of the non-aqueous organic solvent, optionally more than 60 wt% of the at least one linear carbonate and less than 40 wt% of the cyclic carbonate compound, optionally 60 to 80 wt% of the at least one linear carbonate and 20 to 40 wt% of the at least one cyclic carbonate compound.

According to another embodiment of the present invention, a rechargeable lithium battery is provided that includes a positive electrode including a positive active material; a negative electrode including a negative active material; and the electrolyte of any embodiment of the present invention.

The positive active material may optionally include at least one selected from the lithium metal oxides represented by the following Chemical Formulas 14 to 16.

[Chemical Formula 14] $Li_xMO_2$ (M is at least one transition element, and $0 \leq x \leq 1$)

[Chemical Formula 15] $Li_yM_2O_4$ (M is at least one transition element, and, $0 \leq y \leq 2$)

[Chemical Formula 16] $xLi_2MnO_3 \cdot (1-x)LiMn_{2-y}M_yO_4$ (M is at least one transition element, $0<x<1$, and $0 \leq y<1$)

The negative active material may optionally include a carbon-based active material, a Si-based active material, or a combination thereof.
Hereinafter, further embodiments will be described in the detailed description.
The electrolyte for a rechargeable lithium battery affords a rechargeable lithium battery having excellent cycle-life at a high temperature during the cycle and, when allowed to stand, an excellent output characteristic at room temperature and at low temperature.

## BRIEF DESCRIPTION OF THE DRAWINGS

FIG. 1 is a schematic view showing a rechargeable lithium battery according to one embodiment of the present invention.
FIG. 2 is a graph showing capacity retention of the rechargeable lithium batteries according to Examples 1 and 2 and Comparative Examples 1 to 3 at a high temperature and when allowed to stand.
FIG. 3 is graph showing capacity change of rechargeable lithium batteries according to Examples 1 and 2 and Comparative Examples 1 to 3 at a high temperature during the cycle.

## DETAILED DESCRIPTION

Embodiments will hereinafter be described in detail. However, these embodiments are only illustrative, and the present invention is not limited thereto.
The electrolyte for a rechargeable lithium battery according to one embodiment includes a lithium salt, at least one non-aqueous organic solvent and at least one additive.
The lithium salt supplies lithium ions in the battery, and allows the basic operation of a rechargeable lithium battery and improves lithium ion transportation between positive and negative electrodes.
The lithium salt includes a mixture of at least one first and at least one second lithium salts.
The first lithium salt is $LiPF_6$, $LiBF_4$, $LiBF_6$, $LiSbF_6$,
**[0032]** $LiAsF_6$, $LiSO_3F_3$, $LiN(CF_3SO_2)_2$, $LiN(C_2F_5SO_2)_2$, $LiClO_4$, $LiAlO_2$, $LiAlCl_4$, or a combination thereof, preferably $LiPF_6$, $LiBF_4$, or $LiBF_6$.
In a preferred embodiment of the present invention the first lithium salt is optionally included at a concentration ranging from 0.8M to 1.3M in the electrolyte, optionally between 1 M and 1.3M, optionally between 1 M and 1.2M.
In a preferred embodiment of the present invention the first lithium salt may optionally be included in an amount ranging from 11 to 16 wt% based on the total weight of the electrolyte, optionally between 13 and 16 wt%, and optionally between 13 and 15 wt%.
The second lithium salt may is a compound represented by the following Chemical Formula 3-1.

[Chemical Formula 1] (which may be present in addition to the second lithium salt of Chemical Formula 3-1)

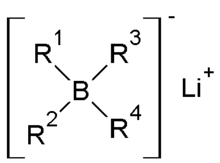

In Chemical Formula 1,

$R^1$ and $R^2$ are each independently F, or $R^1$ and $R^2$ are linked to a substituent represented by the following Chemical

Formula 2 to form a ring, and

$R^3$ and $R^4$ are linked to a substituent represented by the following Chemical Formula 2 to form a ring.

[Chemical Formula 2]

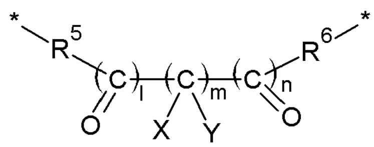

In Chemical Formula 2,$R^5$ and $R^6$ are each independently O or S,

X and Y are each independently hydrogen or F,

l and n are independently 0 or 1, and m is an integer ranging from 0 to 5.

[Chemical Formula 3-1]

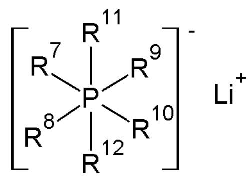

In Chemical Formula 3-1,

$R^7$ and $R^8$ are each independently F, or $R^7$ and $R^8$ are linked to a substituent represented by the above Chemical Formula 2 to form a ring,

$R^9$ and $R^{10}$ are linked to a substituent represented by the above Chemical Formula 2 to form a ring, and

$R^{11}$ and $R^{12}$ are each independently F.

[Chemical Formula 3-2] (which may be present in addition to the second lithium salt of Chemical Formula 3-1)

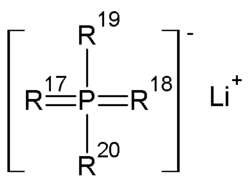

In Chemical Formula 3-2, $R^{17}$ and $R^{18}$ are each independently O, S or NR (wherein R is a substituted or unsubstituted $C_1$ to $C_5$ alkyl group), and

$R^{19}$ and $R^{20}$ are each independently F.

In a preferred embodiment of the present invention in Chemical Formula 1, at least one of $R^1/R^2$ and $R^3/R^4$ form a five-membered ring, optionally where l and n are both 1 in at least one of the rings. Optionally, both of $R^1/R^2$ and $R^3/R^4$ form a five-membered ring and l and n are both 1 in both of the rings.

In a preferred embodiment of the present invention in Chemical Formula 9, $R^{13}$ and $R^{16}$ are both hydrogen and optionally $R^{14}$ and $R^{15}$ are both H or form a six-membered ring. In one embodiment, optionally $R^{13}$ to $R^{16}$ are all hydrogen. In one embodiment $R^{14}$ and $R^{15}$ form a six-membered ring.

The second lithium salt may in particular include at least one selected from the compounds represented by the following Chemical Formulas 6 or 7 but is not limited thereto.

[Chemical Formula 6]

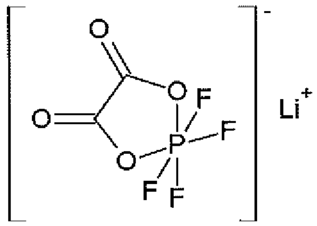

[Chemical Formula 7]

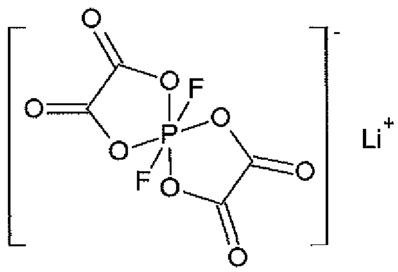

In a rechargeable lithium battery, lithium is oxidized from a lithium metal oxide into lithium ions at a positive electrode, and the lithium ions are intercalated with carbon at a negative electrode during the initial charge. Herein, lithium ions with strong reactivity reduce an electrolyte on the interface and form a layer on the surface of a negative electrode. The layer is called the solid electrolyte interface (SEI).

The layer plays the role of preventing the reaction of a negative electrode with an electrolyte during the charge and discharge and simultaneously, passing lithium ions moving from a positive electrode as an ion tunnel. Accordingly, organic solvent molecules of the solvated lithium ions are intercalated with carbon at the negative electrode and thus, prevent structural collapse of the negative electrode.

When the second lithium salt is added to an electrolyte, an excellent layer with excellent output characteristic at a room temperature and a low temperature may be formed on the surface of the negative electrode surface.

In particular, the second lithium salt includes a negative ion including hetero atom or halogen atom having a co-ordination bond with boron (B) and phosphorous (P) atoms and a lithium positive ion. When the second lithium salt is added to an electrolyte, it is reduced at a lower potential than the non-aqueous organic solvent and thus, accomplishes excellent output characteristic of a lithium rechargeable battery at a room temperature and a low temperature.

The second lithium salt may be included in an amount ranging from 0.1 to 10 wt% based on the total weight of the electrolyte, optionally between 0.5 and 5 wt%, optionally between 0.5 and 1.5 wt%, and optionally between 0.75 and 2 wt%. When the second lithium salt is included within the range, a rechargeable lithium battery may have excellent output characteristic at a room temperature and a low temperature.

In addition, a first lithium salt and the second lithium salt may be mixed in a weight ratio ranging from 1:9 to 9:1, optionally between 1:5 and 5:1, optionally between 1:3 and 3:1.

The additive may include a compound represented by the following Chemical Formula 9.

[Chemical Formula 9]

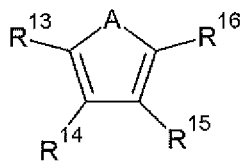

In Chemical Formula 9,

A is S, O, or NR (wherein, R is hydrogen or a substituted or unsubstituted $C_1$ to $C_{20}$ alkyl group),
$R^{13}$ to $R^{16}$ are each independently, hydrogen, halogen, substituted or unsubstituted $C_1$ to $C_{20}$ an alkyl group, or substituted or unsubstituted $C_1$ to $C_{20}$ alkoxy group, and
$R^{14}$ and $R^{15}$ are optionally linked to each other by a substituent represented by Chemical Formula 2 to form a ring.

The additive may in particular include at least one selected from the compounds represented by the following Chemical Formulas 10 to 13 but is not limited thereto.

[Chemical Formula 10]

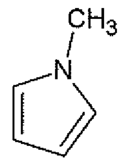

[Chemical Formula 11]

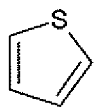

[Chemical Formula 12]

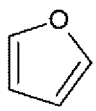

[Chemical Formula 13]

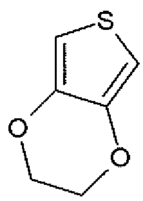

The term "substituted" when used above relates to the presence of at least one, preferably between one and five, most preferably one, two or three of a substituent in the place of a hydrogen atom selected from the group consisting of halogen atoms, hydroxyl groups, nitro groups, cyano groups, amino groups, amidino groups, hydrazino groups, hydrazono groups, carboxyl groups and salts thereof, sulfonic acid groups and salts thereof, phosphoric acid groups and salts thereof, $C_1$-$C_{10}$ alkyl groups, $C_1$-$C_{10}$ alkoxy groups, $C_2$-$C_{10}$ alkenyl groups, $C_2$-$C_{10}$ alkynyl groups, $C_6$-$C_{16}$ aryl groups, and $C_4$-$C_{16}$ heteroaryl groups or combinations thereof. Preferably the substituent is selected from halogen atoms, hydroxyl groups, $C_1$-$C_{10}$ alkyl groups, $C_1$-$C_{10}$ alkoxy groups, $C_2$-$C_{10}$ alkenyl groups and $C_6$-$C_{16}$ aryl groups. Preferably, there are one or two substitutents present.

When the aforementioned second lithium salt is included in an electrolyte, a lithium rechargeable battery may have excellent output characteristic at a room temperature and a low temperature but capacity deterioration during the cycle at a high temperature and when allowed to stand.

The capacity deterioration may occur when a layer on the surface of a negative electrode reacts with intercalated lithium ions, when the residue of a second lithium salt is oxidized at a positive electrode during the charge and discharge at a high temperature, and when these two cases are combined.

The additive is a $\pi$-bond-conjugated compound and is believed to become P-doped with positive charges and, thus, forms a conductive polymer layer. Accordingly, since the conductive polymer layer prevents oxidation of an electrolyte at a high temperature or a high voltage, the electrolyte including the additive may improve cycle-life of a lithium

rechargeable battery during the cycle at a high temperature and when allowed to stand.

The additive may be included in an amount ranging from 0.005 to 3 wt% based on the total weight of the electrolyte, optionally between 0.01 and 1 wt%, optionally between 0.03 and 0.5 wt%, optionally between 0.03 and 0.1 wt%.

In a preferred embodiment of the present invention the additive, a compound represented by Chemical Formula 9, and the second lithium salt may be mixed in a weight ratio ranging from 0.005:1 to 1:1, optionally between 0.03:1 and 0.6:1, optionally between 0.05:1 and 0.3:1.

When the additive is included within the above ranges, the electrolyte may improve cycle-life of a lithium rechargeable battery during the cycle at a high temperature and when allowed to stand.

The non-aqueous organic solvent acts as a medium for transmitting ions taking part in the electrochemical reaction of the battery.

The non-aqueous organic solvent may include a linear carbonate compound, a cyclic carbonate compound, an ester-based compound, an ether-based compound, a ketone-based compound, or a combination thereof.

Optionally, the linear carbonate compound may include diethyl carbonate (DEC), ethylmethyl carbonate (EMC), dimethyl carbonate (DMC), dipropyl carbonate (DPC), methylpropyl carbonate (MPC), ethylpropyl carbonate (EPC), methylethyl carbonate (MEC), or a combination thereof.

The cyclic carbonate compound may optionally include ethylene carbonate (EC), propylene carbonate (PC), butylene carbonate (BC), fluoroethylene carbonate (FEC), vinylethylene carbonate (VEC), or a combination thereof.

In a preferred embodiment of the present invention the at least one non-aqueous solvent comprises a mixture of at least one linear carbonate and at least one cyclic carbonate, optionally 50 to 99 wt% of the at least one linear carbonate and 1 to 50 wt% of the at least one cyclic carbonate compound based on the total amount of the non-aqueous organic solvent, optionally more than 60 wt% of the at least one linear carbonate and less than 40 wt% of the cyclic carbonate compound, optionally 60 to 80 wt% of the at least one linear carbonate and 20 to 40 wt% of the at least one cyclic carbonate compound. Within the above range, a solvent having a high dielectric constant and simultaneously low viscosity may be provided.

The ester-based compound may optionally include methylacetate, ethylacetate, n-propylacetate, dimethylacetate, methylpropionate, ethylpropionate, $\gamma$-butyrolactone, decanolide, valerolactone, mevalonolactone, caprolactone, and the like.

The ether-based compound may optionally include dibutylether, tetraglyme, diglyme, dimethoxyethane, 2-methyltetrahydrofuran, tetrahydrofuran, and the like.

The ketone-based compound may optionally include cyclohexanone and the like.

The non-aqueous organic solvent may optionally further include an alcohol-based compound, aprotic solvent, and the like. The alcohol-based compound may include ethanol, isopropyl alcohol, and the like.

The non-aqueous organic solvent may be used singularly or as a mixture. When the organic solvent is used as a mixture, the mixture ratio can be controlled in accordance with desirable battery performance.

The present invention also encompasses a rechargeable lithium battery comprising the electrolyte of any embodiment of the present invention.

FIG. 1 is a schematic view of a rechargeable lithium battery according to one embodiment of the present invention.

Referring to FIG. 1, the rechargeable lithium battery 100 includes an electrode assembly including a positive electrode 114, a negative electrode 112 facing the positive electrode 114, a separator 113 between the positive electrode 114 and negative electrode 112, and an electrolyte (as described above) (not shown) impregnating the positive electrode 114, negative electrode 112, and separator 113, a battery case 120 housing the electrode assembly, and a sealing member 140 sealing the battery case.

The positive electrode 114 may optionally include a current collector and a positive active material layer on the current collector. The positive active material layer may optionally include a positive active material, a binder, and selectively, a conductive material.

The current collector may optionally be Al but is not limited thereto.

The positive active material may optionally include at least one selected from the lithium metal oxides represented by the following Chemical Formula 14 to 16 but is not limited thereto and may include any positive active material known to be used for a rechargeable lithium battery.

[Chemical Formula 14] $Li_xMO_2$

(M is at least one transition element, and specifically Ni, Co, Mn, Al or a combination thereof, and $0 \leq x \leq 1$)

[Chemical Formula 15] $Li_yM_2O_4$

(M is at least one transition element and specifically, Ni, Co, Mn, Al, or a combination thereof, and $0 \leq y \leq 2$)

[Chemical Formula 16] $xLi_2MnO_3 \cdot (1-x)LiMn_{2-y}M_yO_4$

(M is at least one transition element, and specifically Ni, Co, Mn, Al, or a combination thereof, $0<x<1$, and $0 \leq y<1$)

The binder improves binding properties of the positive active material particles to each other and to a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidenefluoride, polyethylene, polypropylene, styrene-butadiene rubber, acrylated styrene-butadiene rubber, an epoxy resin, nylon, and the like, but is not limited thereto.

The conductive material improves electrical conductivity of a negative electrode. Any electrically conductive material can be used as a conductive agent unless it causes a chemical change. Examples of the conductive material include natural graphite, artificial graphite, carbon black, acetylene black, ketjen black, a carbon fiber, a metal powder or a metal fiber including copper, nickel, aluminum, silver, and the like, and a polyphenylene derivative, and the like.

The negative electrode 112 includes a negative current collector and a negative active material layer disposed thereon.

The negative current collector may optionally include a copper foil.

The negative active material layer may include a negative active material, a binder, and optionally a conductive material.

The negative active material optionally includes a carbon-based active material, a Si-based active material, or a combination thereof, and without limitation, any negative active material in a rechargeable lithium battery may be used.

The carbon-based active material may optionally include crystalline carbon, amorphous carbon or a mixture thereof. The crystalline carbon may be non-shaped, or sheet, flake, spherical, or fiber shaped natural graphite or artificial graphite. The amorphous carbon may be a soft carbon (sintered carbon at a low temperature), a hard carbon, mesophase pitch carbonized products, fired coke, and the like.

The Si-based active material may optionally include Si, $SiO_x$ ($0 < x < 2$), a Si-Y alloy (wherein Y is an element selected from the group consisting of an alkali metal, an alkaline-earth metal, a group 13 element, a group 14 element, a transition element, a rare earth element, and combinations thereof, and is not Si), Sn, $SnO_2$, a Sn-Y alloy (wherein Y is an element selected from the group consisting of an alkali metal, an alkaline-earth metal, a group 13 element, a group 14 element, a transition element, a rare earth element, and combinations thereof and is not Sn), or mixtures thereof. At least one of these materials may be mixed with $SiO_2$. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The binder improves binding properties of the negative active material particles to each other and to a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidenefluoride, polyethylene, polypropylene, styrene-butadiene rubber, acrylated styrene-butadiene rubber, an epoxy resin, nylon, and the like, but is not limited thereto.

The conductive material improves electrical conductivity of a negative electrode. Any electrically conductive material can be used as a conductive agent unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as polyphenylene derivative, and the like; or a mixture thereof.

The negative and positive electrodes 112 and 114 may be fabricated by a method including mixing the active material, a conductive material, and a binder into an active material composition, and coating the composition on a current collector.

The electrode manufacturing method is well known, and thus is not described in detail in the present specification. The electrode manufacturing method is well known, and thus is not described in detail in the present specification.

The separator 113 may be a single layer or a multilayer, for example may be made of polyethylene, polypropylene, polyvinylidene fluoride or a combination thereof.

Hereinafter, the embodiments are illustrated in more detail with reference to examples. However, the following are illustrative embodiments and are not limiting.

Furthermore, what is not described in this specification can be sufficiently understood by those who have knowledge in this field and will not be illustrated here.

**Preparation of Electrolyte** (all examples are not according to the invention)

**Examples 1 and 2 and Comparative Examples 1 to 3**

Ethylene carbonate (EC), ethylmethyl carbonate (EMC), and dimethyl carbonate (DMC) were mixed in a weight ratio of 2:4:4. $LiPF_6$ with a concentration of 1.15M was added to the solution, and a second lithium salt and an additive as described in the following Table 1 were also added thereto, preparing an electrolyte. Herein, the second lithium salt and the additive were added to in an amount of 1 wt% and 0.05 wt% respectively based on the total weight of the electrolyte respectively.

Table 1

| | Second Lithium salt | Additive |
|---|---|---|
| Example 1 | lithium difluoro(oxalato)borate (LiDFOB) | Thiophene |
| Example 2 | LiDFOB | N-methylpyrrole |
| Comparative Example 1 | LiDFOB | - |
| Comparative Example 2 | LiDFOB | Biphenyl |
| Comparative Example 3 | LiDFOB | Succinonitrile |

**Fabrication of a rechargeable lithium battery**

$LiNi_{0.5}Co_{0.2}Mn_{0.3}O_2$ as a positive active material, polyvinylidene fluoride (PVDF) as a binder, and carbon as a conductive material were mixed in a weight ratio of 86:9:5. The mixture was dispersed into N-methyl-2-pyrrolidone to prepare a positive active material layer composition. The positive active material layer composition was coated on a 15μm-thick aluminum foil and then, dried and compressed, fabricating a positive electrode.

On the other hand, a negative active material layer composition was prepared by mixing modified natural graphite as a negative active material, a binder, and a thickener in a weight ratio of 98:1:1 in an aqueous system. The negative active material layer composition was coated on a 10μm-thick copper foil and then, dried and compressed, fabricating a negative electrode.

The positive and negative electrodes and a 25μm-thick polyethylene separator interposed therebetween were wound and compressed together, fabricating a rechargeable lithium battery. Herein, the electrolytes prepared according to Examples 1 and 2 and Comparative Examples 1 to 3 were respectively used.

**Experimental Example 1: Cycle-life evaluation when a battery is allowed to stand at a high temperature**

Each rechargeable lithium battery cell according to Examples 1 and 2 and Comparative Examples 1 to 3 was fully charged at 60°C (state of charge (SOC) = 100%) and allowed to stand for 10 days and then, evaluated regarding cycle-life when allowed to stand at a high temperature. The result is provided in the following Table 2 and FIG. 2.

The cells were CC charged with a 0.2C current up to 3.6V and discharged down to 2.8V discharge during the first cycle and CC charged with a 0.2C current up to 4.5V and discharged down 2.8V during the second cycle, which was their initial formation condition. As a result, an oxide film was formed on the surface of a positive electrode.

The initial capacity and the capacity after being allowed to stand for 10 days were measured by CC-CV charging the cells with a 0.5C current up to 4.2V and then, discharging with a 0.2C current and being cut off at 2.8V.

The capacity retention (%) was calculated as a percentage of discharge capacity after being allowed to stand for 10 days against initial capacity.

The resistance was measured as follows. First of all, the cells in SOC of 50% were applied with 10 different discharge currents for 10 seconds and then, measured regarding voltage at that time. Their DC-IR values can be calculated from the following equation 1 after acquiring a current value ($I_{max}$) at 2.1 V from a current-voltage value. In particular, the 10 different discharge currents were 0.6A, 1A, 1.4A, 1.6A, 1.8A, 2A, 2.2A, 2.4A, 2.6A, and 2.8A.

[Equation 1]

$$DC\text{-}IR = (V_0 - 2.1V)/I_{max} \quad (V_0 = \text{initial voltage in SOC of 50\%})$$

Then, the resistance increasing rate (%) was calculated as a percentage of DC-IR after being allowed to stand for 10 days against initial DC-IR.

Table 2

| | Initial capacity (mAh) | Capacity after being allowed to stand for 10 days (mAh) | Capacity retention (%) | Resistance increasing ratio (%) |
|---|---|---|---|---|
| Example 1 | 91.51 | 79.08 | 86 | 10 |
| Example 2 | 90.04 | 79.79 | 89 | 11 |
| Comparative Example 1 | 90.5 | 75.90 | 84 | 9 |
| Comparative Example 2 | 89.38 | 73.74 | 83 | 10 |
| Comparative Example 3 | 88.79 | 74.96 | 84 | 9 |

FIG. 2 is a graph showing capacity retentions of the rechargeable lithium batteries according to Examples 1 and 2 and Comparative Examples 1 to 3 when allowed to stand at a high temperature.

Referring to FIG. 2 and Table 2, the cells including a lithium salt and an additive according to Examples 1 and 2 had excellent cycle-life when allowed to stand at a high temperature compared with the cells according to Comparative Examples 1 to 3.

**Experimental Example 2: Cycle-life evaluation during high temperature cycles**

Each rechargeable lithium battery according to Examples 1 and 2 and Comparative Examples 1 to 3 was charged and discharged at 45°C under a 1C/C condition. Each rechargeable lithium battery was 100 times charged and discharged and measured regarding capacity retention according a cycle at a high temperature to evaluate cycle-life. The results are provided in the following Table 3 and FIG. 3

Table 3

| | Initial capacity (mAh) | $100^{th}$ capacity (mAh) | Capacity retention (%) |
|---|---|---|---|
| Example 1 | 90.11 | 81.11 | 90 |
| Example 2 | 89.41 | 81.68 | 91 |
| Comparative Example 1 | 88.46 | 78.41 | 89 |
| Comparative Example 2 | 88.80 | 80.03 | 90 |
| Comparative Example 3 | 88.35 | 79.00 | 89 |

FIG. 3 is a graph showing capacity change of the rechargeable lithium batteries of Examples 1 and 2 and Comparative Examples 1 to 3 during the cycles at a high temperature.

Referring to FIG. 3 and Table 3, the cells including both a lithium salt and an additive according to Examples 1 and 2 were identified to have excellent cycle-life during the high temperature cycle compared with the cells according to Comparative Examples 1 to 3.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

**1.** An electrolyte for a lithium rechargeable battery comprising:

(i) at least one non-aqueous organic solvent;
(ii) at least one first lithium salt selected from the group consisting of $LiPF_6$, $LiBF_4$, $LiBF_6$, $LiSbF_6$, $LiAsF_6$, $LiSO_3CF_3$, $LiN(CF_3SO_2)_2$, $LiN(C_2F_5SO_2)_2$, $LiClO_4$, $LiAlO_2$, $LiAlCl_4$, or a combination thereof;
(iii) at least one second lithium salt represented by Chemical Formula 3-1:

[Chemical Formula 3-1]

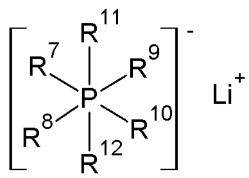

$R^7$ and $R^8$ are each F, or $R^7$ and $R^8$ are linked to a substituent represented by Chemical Formula 2 to form a ring,
$R^9$ and $R^{10}$ are linked to a substituent represented by the above Chemical Formula 2 to form a ring, and $R^{11}$ and $R^{12}$ are each F,

[Chemical Formula 2]

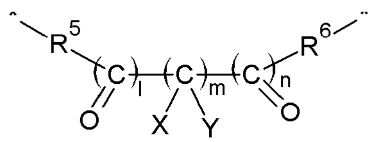

$R^5$ and $R^6$ are each independently O or S,
X and Y are each independently hydrogen or F,
l and n are independently 0 or 1, and m is an integer ranging from 0 to 5; and

(iv) at least one compound represented by Chemical Formula 9:

[Chemical Formula 9]

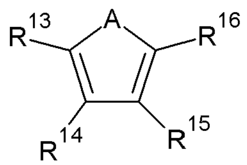

A is S, O, or NR R is hydrogen, or a substituted or unsubstituted $C_1$ to $C_{20}$ alkyl group, and
$R^{13}$ to $R^{16}$ are each independently hydrogen, a halogen, a substituted or unsubstituted $C_1$ to $C_{20}$ alkyl group, or a substituted or unsubstituted $C_1$ to $C_{20}$ alkoxy group, optionally $R^{14}$ and $R^{15}$ are linked by a substituent represented by Chemical Formula 2 to form a ring, wherein the compound represented by Chemical Formula 9 and the second lithium salt is mixed in a weight ratio ranging from 0.005:1 to 1:1.

**2.** An electrolyte according to claim 1, wherein the second lithium salt is included in an amount ranging from 0.1 to 10 wt% based on the total weight of the electrolyte, optionally between 0.5 and 5 wt%, optionally between 0.5 and 1.5 wt%, and optionally between 0.75 and 2 wt%.

**3.** An electrolyte according to claim 1 or 2, wherein the compound represented by Chemical Formula 9 is included in an amount ranging from 0.005 to 3 wt% based on the total weight of the electrolyte, optionally between 0.01 and 1 wt%, optionally between 0.03 and 0.5 wt%, optionally between 0.03 and 0.1 wt%.

**4.** An electrolyte according to any of claims 1 to 3, wherein the first lithium salt is included at a concentration ranging from 0.8M to 1.3M in the electrolyte, optionally between 1.0 M and 1.3M, optionally between 1.0 M and 1.2M.

**5.** An electrolyte according to any of claims 1 to 4, wherein the first lithium salt and the second lithium salt is mixed in

a weight ratio ranging from 1:9 to 9:1, optionally between 1:5 and 5:1, optionally between 1:3 and 3:1.

**6.** An electrolyte according to any of claims 1 to 5, wherein the compound represented by Chemical Formula 9 and the second lithium salt is mixed in a weight ratio ranging between 0.03:1 and 0.6:1, optionally between 0.05:1 and 0.3:1.

**7.** An electrolyte according to any of claims 1 to 5, wherein the at least one non-aqueous solvent is selected from the group consisting of at least one linear carbonate compound, at least one cyclic carbonate compound, at least one ester-based compound, at least one ether-based compound, at least one ketone-based compound, or a combination thereof, optionally wherein the at least one non-aqueous solvent is a carbonate selected from the group consisting of diethyl carbonate (DEC), ethylmethyl carbonate (EMC), dimethyl carbonate (DMC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), vinylethylene carbonate (VEC), or a combination thereof.

**8.** An electrolyte according to claim 7, wherein the at least one non-aqueous solvent comprises a mixture of at least one linear carbonate and at least one cyclic carbonate, optionally 50 to 99 wt% of the at least one linear carbonate and 1 to 50 wt% of the at least one cyclic carbonate compound based on the total amount of the non-aqueous organic solvent, optionally more than 60 wt% of the at least one linear carbonate and less than 40 wt% of the cyclic carbonate compound, optionally 60 to 80 wt% of the at least one linear carbonate and 20 to 40 wt% of the at least one cyclic carbonate compound.

**9.** An electrolyte according to any preceding claim, wherein in Chemical Formula 9, $R^{13}$ and $R^{16}$ are both hydrogen and optionally $R^{14}$ and $R^{15}$ are both H or form a six-membered ring.

**10.** An electrolyte according to any preceding claim, wherein the at least one compound represented by Chemical Formula 9 is selected from the compounds represented by the following Chemical Formulas 10 to 13 or mixtures thereof:

[Chemical Formula 10]

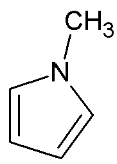

[Chemical Formula 11]

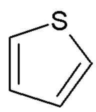

[Chemical Formula 12]

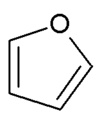

[Chemical Formula 13]

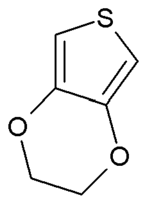

**11.** An electrolyte according to any preceding claim, wherein the least one second lithium salt is selected from the compounds represented by the following Chemical Formulas 6 to 7 or mixtures thereof:

[Chemical Formula 6]

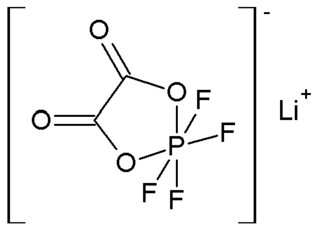

[Chemical Formula 7]

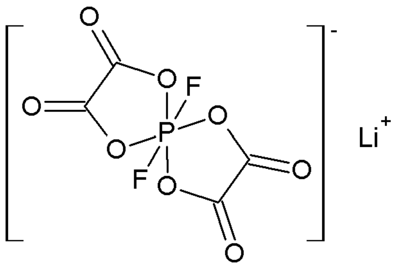

**Patentansprüche**

**1.** Elektrolyt für eine wiederaufladbare Lithiumbatterie, umfassend:

(i) mindestens ein nicht wässriges organisches Lösungsmittel;
(ii) mindestens ein erstes Lithiumsalz ausgewählt aus der Gruppe bestehend aus $LiPF_6$, $LiBF_4$, $LiBF_6$, $LiSbF_6$, $LiAsF_6$, $LiSO_3CF_3$, $LiN(CF_3SO_2)_2$, $LiN(C_2F_5SO_2)_2$, $LiClO_4$, $LiAlO_2$, $LiAlCl_4$ oder einer Kombination daraus;
(iii) mindestens ein zweites Lithiumsalz, das durch die chemische Formel 3-1 dargestellt ist:

[chemische Formel 3-1]

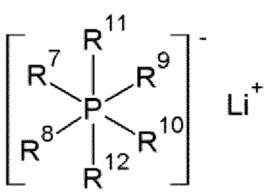

$R^7$ und $R^8$ sind jeweils F, oder $R^7$ und $R^8$ sind mit einem Substituenten verbunden, der durch die chemische

Formel 2 dargestellt ist, und bilden so einen Ring,
$R^9$ und $R^{10}$ sind mit einem Substituenten verbunden, der durch die vorstehende chemische Formel 2 dargestellt ist, und bilden so einen Ring, und
$R^{11}$ und $R^{12}$ sind jeweils F,

[chemische Formel 2]

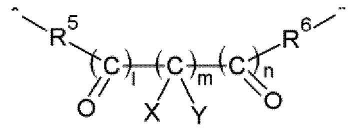

$R^5$ und $R^6$ sind jeweils unabhängig 0 oder S,
X und Y sind jeweils unabhängig Wasserstoff oder F, 1 und n sind unabhängig 0 oder 1 und m ist eine ganze Zahl von 0 bis 5; und

(iv) mindestens eine Verbindung, die durch die chemische Formel 9 dargestellt ist:

[chemische Formel 9]

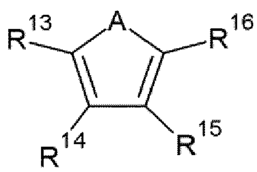

A ist S, 0 oder NR, R ist Wasserstoff oder eine substituierte oder nicht substituierte $C_1$- bis $C_{20}$-Alkylgruppe, und
$R^{13}$ bis $R^{16}$ sind jeweils unabhängig Wasserstoff, ein Halogen, eine substituierte oder nicht substituierte $C_1$- bis $C_{20}$-Alkylgruppe oder eine substituierte oder nicht substituierte $C_1$- bis $C_{20}$-Alkoxygruppe, $R^{14}$ und $R^{15}$ sind gegebenenfalls über einen Substituenten, der durch die chemische Formel 2 dargestellt ist, verbunden und bilden so einen Ring, wobei die Verbindung, die durch die chemische Formel 9 dargestellt ist, und das zweite Lithiumsalz in einem Gewichtsverhältnis von 0,005:1 bis 1:1 gemischt sind.

**2.** Elektrolyt nach Anspruch 1, wobei das zweite Lithiumsalz basierend auf dem Gesamtgewicht des Elektrolyten in einer Menge von 0,1 bis 10 Gew.-%, gegebenenfalls zwischen 0,5 und 5 Gew.-%, gegebenenfalls zwischen 0,5 und 1,5 Gew.-% und gegebenenfalls zwischen 0,75 und 2 Gew.-% enthalten ist.

**3.** Elektrolyt nach Anspruch 1 oder 2, wobei die Verbindung, die durch die chemische Formel 9 dargestellt ist, basierend auf dem Gesamtgewicht des Elektrolyten in einer Menge von 0,005 bis 3 Gew.-%, gegebenenfalls zwischen 0,01 und 1 Gew.-%, gegebenenfalls zwischen 0,03 und 0,5 Gew.-%, gegebenenfalls zwischen 0,03 und 0,1 Gew.-% enthalten ist.

**4.** Elektrolyt nach einem der Ansprüche 1 bis 3, wobei das erste Lithiumsalz in einer Konzentration von 0,8 M bis 1,3 M, gegebenenfalls zwischen 1,0 M und 1,3 M, gegebenenfalls zwischen 1,0 M und 1,2 M, in dem Elektrolyten enthalten ist.

**5.** Elektrolyt nach einem der Ansprüche 1 bis 4, wobei das erste Lithiumsalz und das zweite Lithiumsalz in einem Gewichtsverhältnis von 1:9 bis 9:1, gegebenenfalls zwischen 1:5 und 5:1, gegebenenfalls zwischen 1:3 und 3:1 gemischt sind.

**6.** Elektrolyt nach einem der Ansprüche 1 bis 5, wobei die Verbindung, die durch die chemische Formel 9 dargestellt ist, und das zweite Lithiumsalz in einem Gewichtsverhältnis zwischen 0,03:1 und 0,6:1, gegebenenfalls zwischen 0,05:1 und 0,3:1, gemischt sind.

**7.** Elektrolyt nach einem der Ansprüche 1 bis 5, wobei das mindestens eine nicht wässrige Lösungsmittel aus der Gruppe bestehend aus mindestens einer linearen Carbonatverbindung, mindestens einer cyclischen Carbonatverbindung, mindestens einer Verbindung auf Esterbasis, mindestens einer Verbindung auf Etherbasis, mindestens einer Verbindung auf Ketonbasis oder einer Kombination daraus ausgewählt ist, wobei gegebenenfalls das mindestens eine nicht wässrige Lösungsmittel ein Carbonat ist, das aus der Gruppe bestehend aus Diethylcarbonat (DEC), Ethylmethylcarbonat (EMC), Dimethylcarbonat (DMC), Dipropylcarbonat (DPC), Methylpropylcarbonat (MPC), Ethylpropylcarbonat (EPC), Methylethylcarbonat (MEC), Ethylencarbonat (EC), Propylencarbonat (PC), Butylencarbonat (BC), Fluorethylencarbonat (FEC), Vinylethylencarbonat (VEC) oder einer Kombination daraus ausgewählt ist.

**8.** Elektrolyt nach Anspruch 7, wobei das mindestens eine nicht wässrige Lösungsmittel eine Mischung aus mindestens einem linearen Carbonat und mindestens einem cyclischen Carbonat umfasst, gegebenenfalls 50 bis 99 Gew.-% des mindestens einen linearen Carbonats und 1 bis 50 Gew.-% der mindestens einen cyclischen Carbonatverbindung, basierend auf der Gesamtmenge des nicht wässrigen organischen Lösungsmittels, gegebenenfalls mehr als 60 Gew.-% des mindestens einen linearen Carbonats und weniger als 40 Gew.-% der cyclischen Carbonatverbindung, gegebenenfalls 60 bis 80 Gew.-% des mindestens einen linearen Carbonats und 20 bis 40 Gew.-% der mindestens einen cyclischen Carbonatverbindung.

**9.** Elektrolyt nach einem vorangehenden Anspruch, wobei in der chemischen Formel 9 sowohl $R^{13}$ als auch $R^{16}$ Wasserstoff sind und gegebenenfalls sowohl $R^{14}$ als auch $R^{15}$ H sind oder einen sechsgliedrigen Ring bilden.

**10.** Elektrolyt nach einem vorangehenden Anspruch, wobei die mindestens eine Verbindung, die durch die chemische Formel 9 dargestellt ist, aus den Verbindungen, die durch die folgende chemische Formel 10 bis 13 dargestellt sind, oder Mischungen davon ausgewählt ist:

[chemische Formel 10]

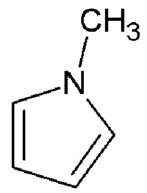

[chemische Formel 11]

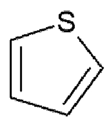

[chemische Formel 12]

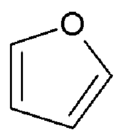

[chemische Formel 13]

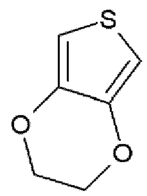

**11.** Elektrolyt nach einem vorangehenden Anspruch, wobei das mindestens eine zweite Lithiumsalz aus den Verbindungen, die durch die folgende chemische Formel 6 bis 7 dargestellt sind, oder Mischungen davon ausgewählt ist:

[chemische Formel 6]

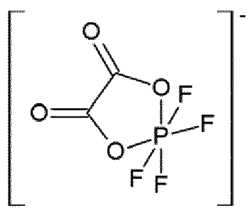

[chemische Formel 7]

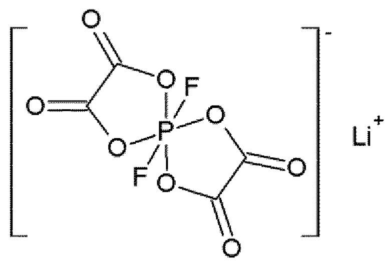

.

## Revendications

**1.** Electrolyte pour batterie au lithium rechargeable comprenant :

(i) au moins un solvant organique non aqueux ;
(ii) au moins un premier sel de lithium choisi dans le groupe constitué par $LiPF_6$, $LiBF_4$, $LiBF_6$, $LiSbF_6$, $LiAsF_6$, $LiSO_3CF_3$, $LiN(CF_3SO_2)_2$, $LiN(C_2F_5SO_2)_2$, $LiClO_4$, $LiAlO_2$, $LiAlCl_4$, ou une combinaison de ceux-ci ;
(iii) au moins un second sel de lithium représenté par la formule chimique 3-1 :

[formule chimique 3-1]

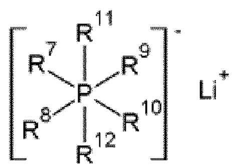

$R^7$ et $R^8$ représentent respectivement F, ou $R^7$ et $R^8$ sont liés à un substituant représenté par la formule chimique 2 pour former un cycle,

$R^9$ et $R^{10}$ sont liés à un substituant représenté par la formule chimique 2 ci-dessus pour former un cycle, et $R^{11}$ et $R^{12}$ représentent respectivement F,

[formule chimique 2]

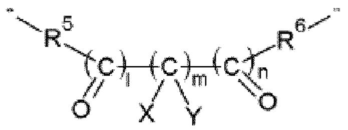

$R^5$ et $R^6$ représentent respectivement 0 ou S,
X et Y représentent respectivement indépendamment l'hydrogène ou F,
1 et n sont indépendamment 0 ou 1, et m est un entier allant de 0 à 5 ; et

(iv) au moins un composé représenté par la formule chimique 9 :

[formule chimique 9]

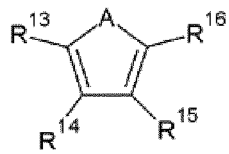

A représente S, 0 ou NR, R représente l'hydrogène ou un groupe alkyle en $C_1$ à $C_{20}$ substitué ou non substitué, et
$R^{13}$ à $R^{16}$ représentent respectivement indépendamment l'hydrogène, un halogène, un groupe alkyle en $C_1$ à $C_{20}$ substitué ou non substitué, ou un groupe alkoxy en $C_1$ à $C_{20}$ substitué ou non substitué, éventuellement $R^{14}$ et $R^{15}$ sont liés par un substituant représenté par la formule chimique 2 pour former un cycle, le composé représenté par la formule chimique 9 et le second sel de lithium étant mélangés en un rapport en poids allant de 0,005:1 à 1:1.

2. Electrolyte selon la revendication 1, dans lequel le second sel de lithium est inclus en une quantité allant de 0,1 à 10 % en poids sur la base du poids total de l'électrolyte, éventuellement entre 0,5 et 5 % en poids, éventuellement entre 0,5 et 1,5 % en poids et éventuellement entre 0,75 et 2 % en poids.

3. Electrolyte selon la revendication 1 ou 2, dans lequel le composé représenté par la formule chimique 9 est inclus en une quantité allant de 0,005 à 3 % en poids sur la base du poids total de l'électrolyte, éventuellement entre 0,01 et 1 % en poids, éventuellement entre 0,03 et 0,5 % en poids, éventuellement entre 0,03 et 0,1 % en poids.

4. Electrolyte selon l'une quelconque des revendications 1 à 3, dans lequel le premier sel de lithium est inclus en une concentration allant de 0,8 M à 1,3 M dans l'électrolyte, éventuellement entre 1,0 M et 1,3 M, éventuellement entre 1,0 M et 1,2 M.

5. Electrolyte selon l'une quelconque des revendications 1 à 4, dans lequel le premier sel de lithium et le second sel de lithium sont mélangés en un rapport en poids allant de 1:9 à 9:1, éventuellement entre 1:5 et 5:1, éventuellement entre 1:3 et 3:1.

6. Electrolyte selon l'une quelconque des revendications 1 à 5, dans lequel le composé représenté par la formule chimique 9 et le second sel de lithium sont mélangés en un rapport en poids allant de 0,03:1 à 0,6:1, éventuellement entre 0,05:1 et 0,3:1.

7. Electrolyte selon l'une quelconque des revendications 1 à 5, dans lequel l'au moins un solvant non aqueux est choisi dans le groupe constitué par au moins un composé de carbonate linéaire, au moins un composé de carbonate cyclique, au moins un composé à base d'ester, au moins un composé à base d'éther, au moins un composé à base de cétone, ou une combinaison de ceux-ci, éventuellement dans lequel l'au moins un solvant non aqueux est un carbonate choisi dans le groupe constitué par le diéthylcarbonate (DEC), l'éthylméthylcarbonate (EMC), le diméthylcarbonate (DMC), le dipropylcarbonate (DPC), le méthylpropylcarbonate (MPC), l'éthylpropylcarbonate (EPC),

le méthyléthylcarbonate (MEC), le carbonate d'éthylène (EC), le carbonate de propylène (PC), le carbonate de butylène (BC), le carbonate de fluoréthylène (FEC), le carbonate de vinyléthylène (VEC), ou une combinaison de ceux-ci.

**8.** Electrolyte selon la revendication 7, dans lequel l'au moins un solvant non aqueux comprend un mélange d'au moins un carbonate linéaire et d'au moins un carbonate cyclique, éventuellement de 50 à 99 % en poids de l'au moins un carbonate linéaire et 1 à 50 % en poids de l'au moins un composé de carbonate cyclique sur la base de la quantité totale de solvant organique non aqueux, éventuellement plus de 60 % en poids de l'au moins un carbonate linéaire et moins de 40 % en poids du composé de carbonate cyclique, éventuellement 60 à 80 % en poids de l'au moins un carbonate linéaire et 20 à 40 % en poids de l'au moins un composé de carbonate cyclique.

**9.** Electrolyte selon l'une quelconque des revendications précédentes, dans lequel, dans la formule chimique 9, $R^{13}$ et $R^{16}$ représentent tous deux l'hydrogène, et éventuellement $R^{14}$ et $R^{15}$ représentent tous deux H ou forment un cycle à six membres.

**10.** Electrolyte selon l'une quelconque des revendications précédentes, dans lequel l'au moins un composé représenté par la formule chimique 9 est choisi parmi les composés représentés par les formules chimiques 10 à 13 suivantes ou des mélanges de ceux-ci :

[formule chimique 10]

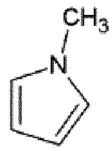

[formule chimique 11]

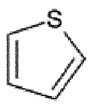

[formule chimique 12]

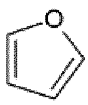

[formule chimique 13]

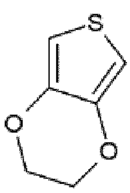

**11.** Electrolyte selon l'une quelconque des revendications précédentes, dans lequel l'au moins un second sel de lithium est choisi parmi les composés représentés par les formules chimiques 6 à 7 suivantes ou des mélanges de ceux-ci :

[formule chimique 6]

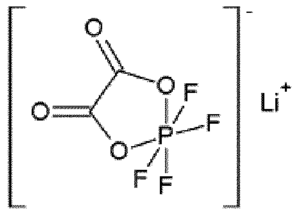

[formule chimique 7]

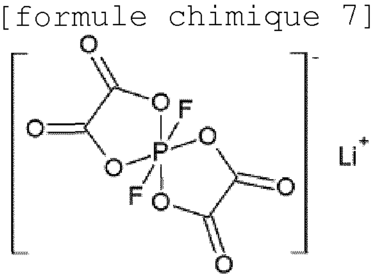

FIG.1

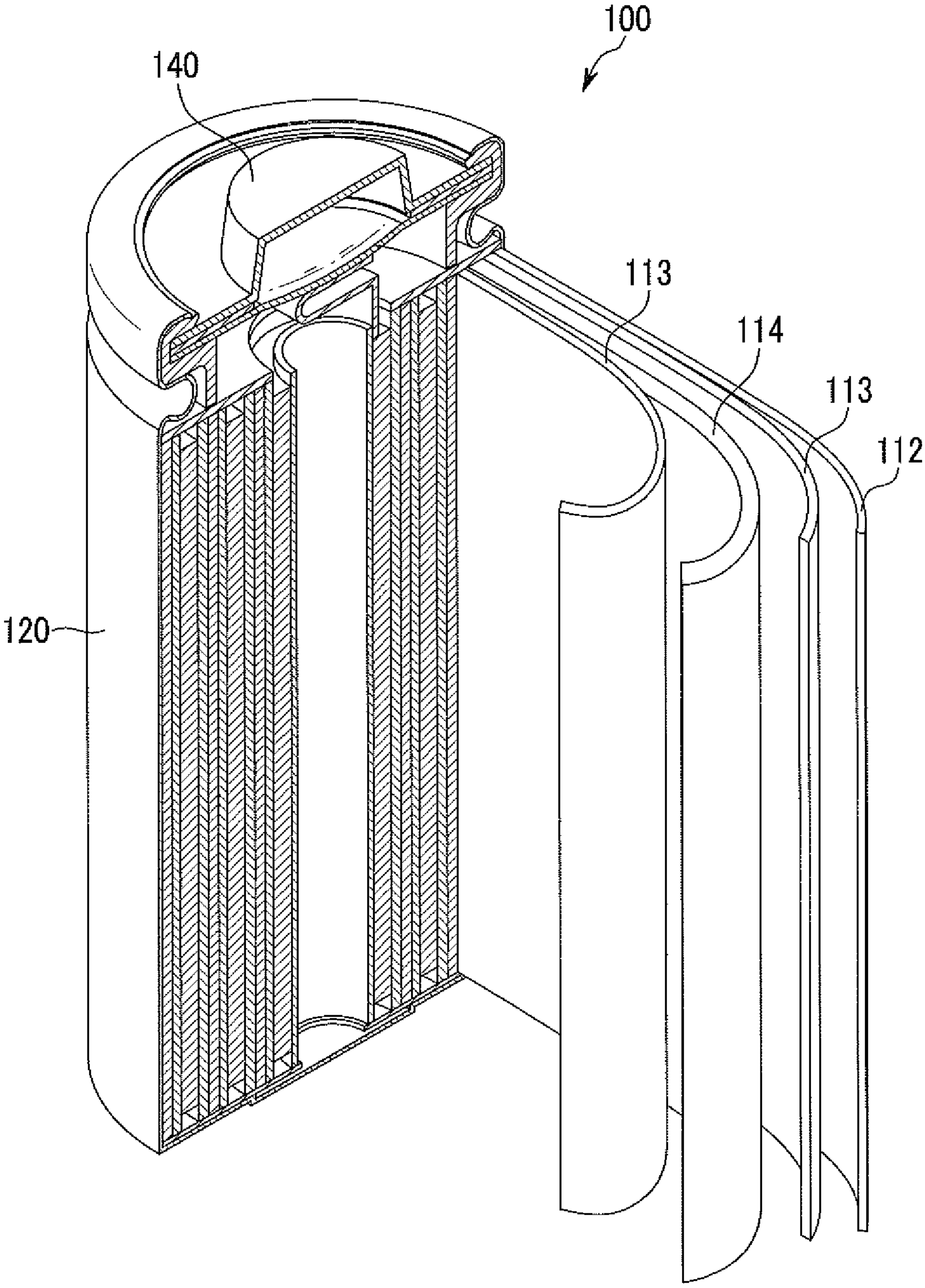

FIG.2

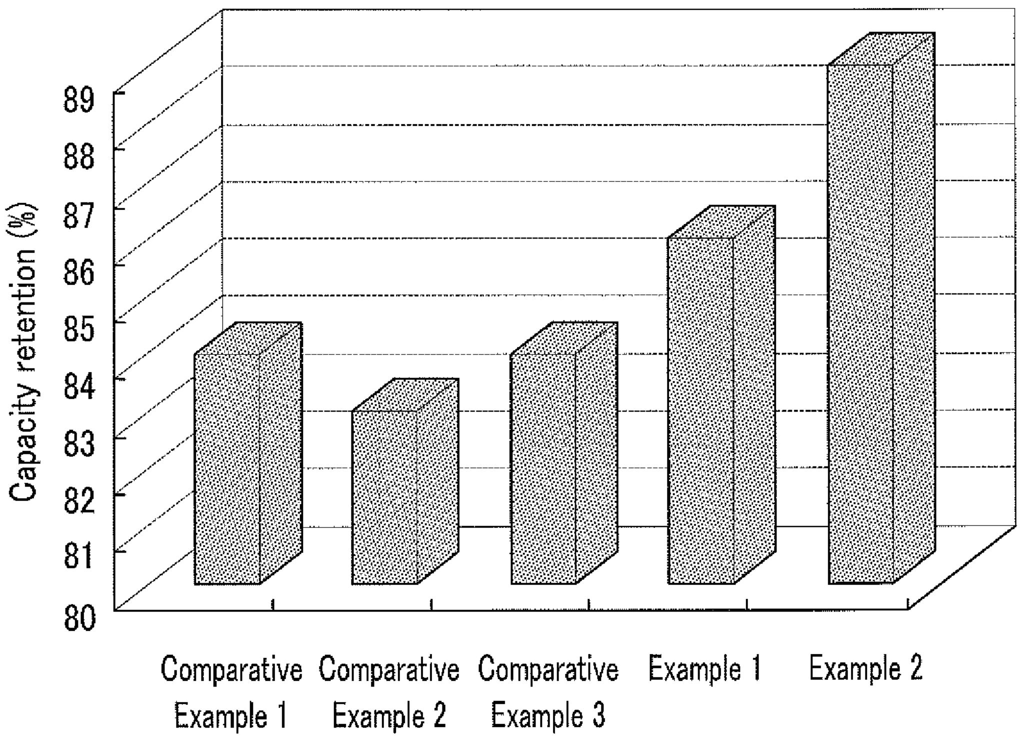
Capacity retention (%)
89
88
87
86
85
84
83
82
81
80
Comparative Example 1
Comparative Example 2
Comparative Example 3
Example 1
Example 2

FIG.3

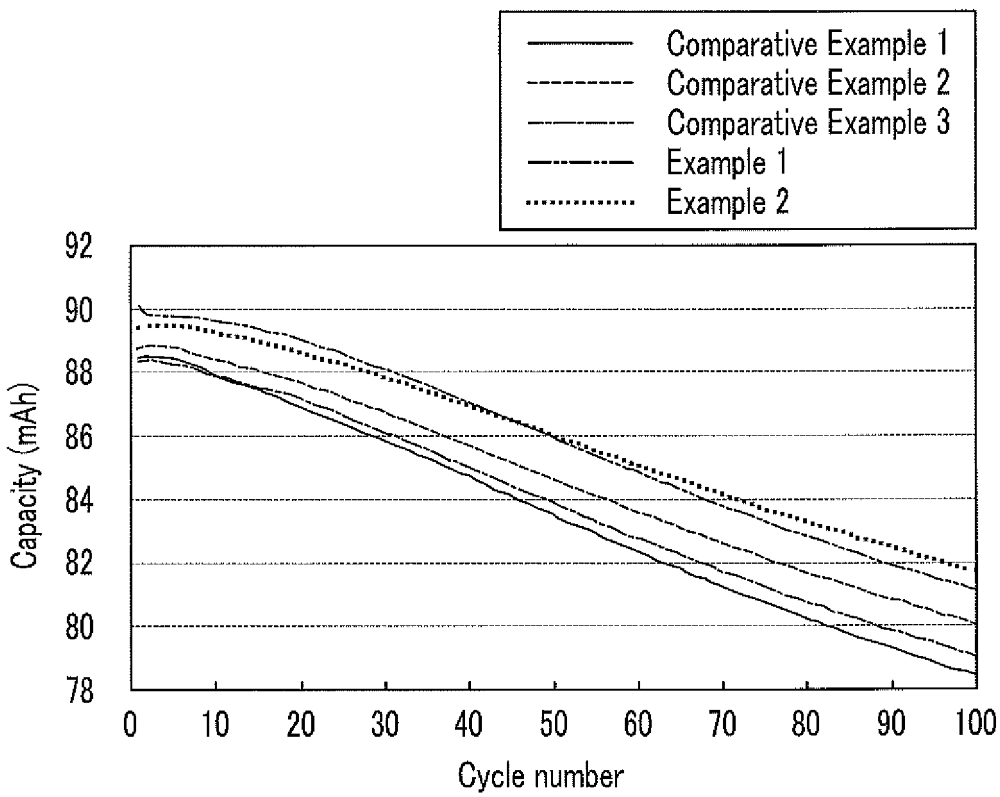
Comparative Example 1
Comparative Example 2
Comparative Example 3
Example 1
Example 2
92
90
88
86
84
82
80
78
Capacity (mAh)
0
10
20
30
40
50
60
70
80
90
100
Cycle number